# EUROPEAN PATENT APPLICATION

(11) **EP 1 099 513 A1**
(43) Date of publication of application: **16.05.2001**
(21) Application number: 00123499.6
(22) Date of filing: 08.11.2000
(51) Int. Cl.: B24B 41/00, B24B 9/10, B23Q 5/04

(54) **Beveling tool for glass plate working machines**

(30) Priority: 12.11.1999 IT MI992371
(71) Applicant: Z. BAVELLONI S.p.A., I-22070 Bregnano (Como) (IT)
(72) Inventor: Bavelloni, Franco, 22020 San Fermo della Battaglia (Como) (IT)
(74) Representative: Modiano, Guido, Dr.-Ing.

(57) **Abstract**

A beveling tool for glass plate working machines, comprising a box-like body (2) which rotatably supports a shank (3) for coupling to a rotating spindle (10) of a glass plate working machine, the device further comprising a first shaft section (11) which is connected to the shank (3) and is axially aligned with the rotating spindle (10). The first shaft section (11) is operatively associated with a second shaft section (14) which is inclined with respect to the first shaft section and is provided with means for supporting a beveling grinder (20).

## Description

The present invention relates to a beveling tool for glass plate working machines.

It is known that beveling on the edges of glass plates is normally performed by using numeric-control machines with five axes, i.e., machines which also include two inclined axes and are very expensive.

Currently, the use of numeric-control machines with four axes, i.e., with two perpendicular axes, a vertical axis and a rotating spindle, does not allow to perform beveling but only allows grinding on the edge of the glass plates or optionally to drill holes or perform milling.

The aim of the invention is to solve the above-described problem by providing a beveling tool for glass plate working machines which allows to obtain beveling by using a normal four-axis numeric-control machine instead of the expensive five-axis machines that are currently used.

Within the scope of this aim, an object of the present invention is to provide a beveling tool which can be easily connected to the working head so that it can follow the path of the edge, maintaining at all times the same relative position between the edge and the plate being worked.

Another object of the present invention is to provide a beveling tool which, thanks to its constructive characteristics, is capable of giving the greatest assurances of reliability and safety in use.

Another object of the present invention is to provide a beveling tool for glass plate working machines which can be easily obtained starting from commonly commercially available elements and materials and is also competitive from a merely economical point of view.

These and other objects which will become better apparent hereinafter are achieved by a beveling tool for glass plate working machines, according to the present invention, which comprises a box-like body which rotatably supports a shank for coupling to a rotating spindle of a glass plate working machine, characterized in that it comprises a first shaft section which is connected to said shank and is axially aligned with said rotating spindle, said first shaft section being operatively associated with a second shaft section which is inclined with respect to said first shaft section and is provided with means for supporting a beveling grinder.

Further characteristics and advantages will become better apparent from the following detailed description of a preferred but not exclusive embodiment of a beveling tool for glass plate working machines according to the present invention, illustrated only by way of non-limitative example in the accompanying drawings, wherein:

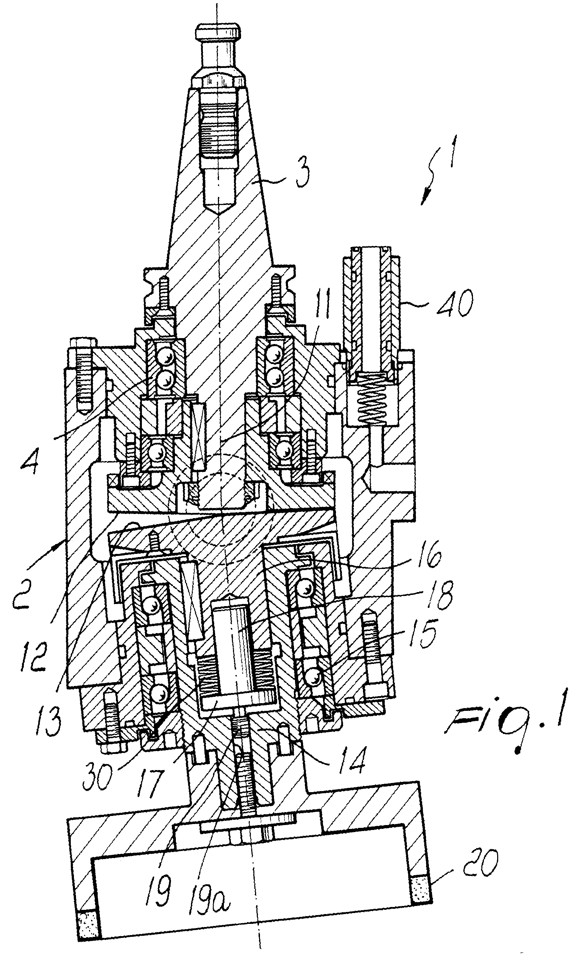

Figure 1 is a sectional view of the beveling tool according to the present invention;
Figure 2 is a view of the beveling tool, schematically connected to a working head.

With reference to the above figures, the beveling tool for glass plate working machines, generally designated by the reference numeral 1, comprises an outer box-like body or enclosure 2 which rotatably supports a coupling shank 3 which is connected by interposing first bearings, generally designated by the reference numeral 4.

The coupling shank 3 can be connected, in a per se known manner, to the spindle 10 of a working head 9 of a glass plate working machine of the four-axis numeric-control type.

A first shaft section 11 is connected to the shank 3, is axially aligned with the spindle 10 and is rigidly associated with a first friction disk 12, which is operatively associated with a second friction disk 13 which is rigidly supported by a second shaft section 14 which is inclined with respect to the first shaft section 11 and also is rotatably supported inside the outer enclosure 2 by interposing second bearings, designated by the reference numeral 15.

The second shaft section supports a beveling grinder, generally designated by the reference numeral 20, whose axis is inclined with respect to the axis of the spindle.

In this way, a working coupling is provided between the first shaft 11 section and the second shaft section 14, which are mutually inclined but interconnected by means of the first and second friction disks 12, 13, which are advantageously frustum-shaped and conical and are pushed into mutual contact by way of elastic pusher means, constituted by a pack of Belleville spring washers 30, which act between the coupling body 16, to which the second friction disk 13 is connected, and which can slide axially within the second shaft 14 and rotated rigidly therewith.

The Belleville spring washers 30 act between the free end of the coupling body and a plate 17 which is connected to a guiding piston 18, which can slide inside the body 16. The thrust of the Belleville spring washers 30 can be set by means of setting grub screws 19 which are inserted in a threaded seat 19a arranged inside the second shaft section 14.

In this way it is possible to adjust the thrust applied to the second friction disk, which is moved into contact with the first friction disk 12.

The tool 1 is connected to the spindle 10 so that when the shank 3 is turned the beveling grinder 20 is turned correspondingly.

It will be further noted that connection through the insertion-coupling element 40 allows rotation of the box-like body 2 so as to keep the grinder inclination, with respect to the glass plate, constant while following the perimetric line of the glass plate under working.

Another important aspect is also constituted by the fact that it is possible to variate the inclination of the beveling grinder by modifying, before starting machining operation, the relative positioning of the box-like body with respect tot he glass plate under working; in this way gradual decreasing of the beveling grinder angle is possible with respect to the maximum angle, which is constituted by the angle formed between the shaft section 11 and the coupling body 16.

Substantially, by gradually rotating the box-like body 2 with respect to the shank 3 the working angle gradually diminishes.

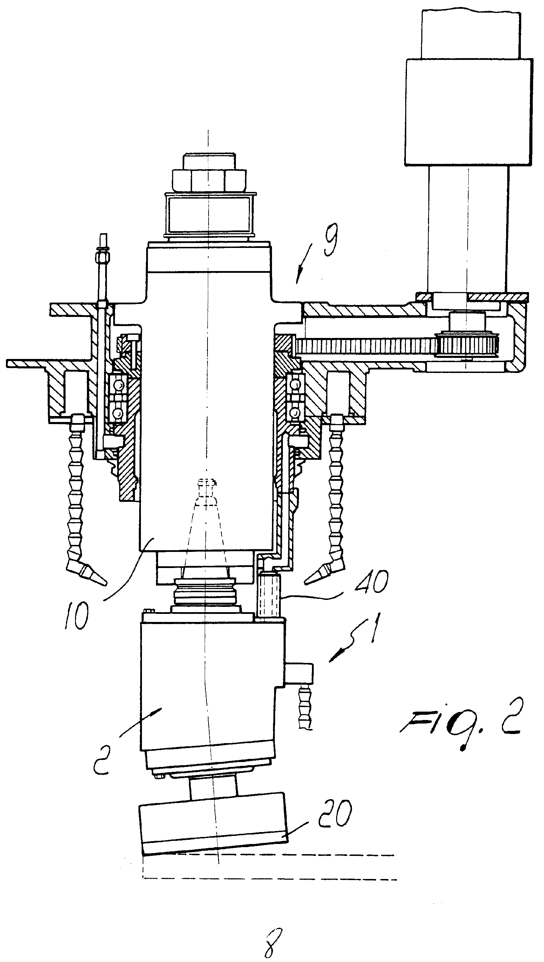

As can be seen in Figure 2, the outer enclosure 2 is connected to the working head by means of the typical insertion-coupling element 40, which allows to turn the grinder, thus keeping it in the chosen position during beveling along the entire perimeter of the glass plate.

From the above description it is thus evident that the present invention achieves the intended aim and objects and that the beveling tool can be used on a conventional four-axis numeric-control machine, achieving results which are currently not attainable because beveling operations always necessarily required a five-axis machine, which is considerably more complicated and expensive.

The invention thus conceived is susceptible of numerous modifications and variations, all of which are within the scope of the inventive concept.

All the details may further be replaced with other technically equivalent elements.

In practice, the materials employed, as well as the contingent shapes and dimensions, may be any according to requirements.

The disclosures in Italian Patent Application No. MI99A002371 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A beveling tool for glass plate working machines, comprising a box-like body which rotatably supports a shank for coupling to a rotating spindle of a glass plate working machine, characterized in that it comprises a first shaft section which is connected to said shank and is axially aligned with said rotating spindle, said first shaft section being operatively associated with a second shaft section which is inclined with respect to said first shaft section and is provided with means for supporting a beveling grinder.

2. The tool according to claim 1, characterized in that said first and second shaft sections are mutually associated by way of friction means.

3. The tool according to claim 2, characterized in that it comprises a first friction disk which is connected to said first shaft section and a second friction disk which is rigidly supported by said second shaft section.

4. The tool according to claim 3, characterized in that said friction disks are respectively frustum-shaped and conical.

5. The tool according to claim 3, characterized in that it comprises elastic pusher means which act on said second friction disk in order to push it against said first friction disk.

6. The tool according to claim 5, characterized in that said elastic pusher means are constituted by Belleville spring washers which act between the free end of a coupling body connected to said second friction disk and a plate which is associated with a guiding piston which can slide inside said coupling body, setting means being further provided for adjusting the compression of said Belleville spring washers.

7. The tool according to claim 1, characterized in that it comprises an insertion-coupling element which is associated with said box-like body and can be coupled to a working head that supports said spindle.

8. The tool, according to one or more of the preceding claims, characterized in that it comprises variation means for variating positioning of said box-like body with respect to a glass plate under working whereby to variate an angle of the beveling grinder.

9. The tool, according to one or more of the preceding claims, characterized in said variation means for variating the positioning of said box-like body comprise rotation means for rotation about the axis defined by said shank.

10. The tool according to claim 1, characterized in that it can be coupled to four-axis numeric-control machines for performing beveling operations.
